# FASCICULE DE BREVET EUROPEEN

(11) **EP 1 806 524 B1**
(45) Date de publication et mention de la délivrance du brevet: **14.07.2010**
(21) Numéro de dépôt: 07290024.4
(22) Date de dépôt: 09.01.2007
(51) Int. Cl.: F16J 15/32

(54) **Garniture d'étanchéité tournante et palier à roulement comportant une telle garniture**
Drehbare Dichtung und Wälzlager, das eine solche Dichtung umfasst
Rotating seal packing and anti-friction bearing comprising same

(30) Priorité: 10.01.2006 FR 0650093
(43) Date de publication de la demande: 11.07.2007
(73) Titulaire: S.N.R. ROULEMENTS, 74000 Annecy (FR)
(72) Inventeur: Ruhland, Siegfried, 74540 Saint Sylvestre (FR)
(74) Mandataire: Novagraaf Technologies

(56) Documents cités:
- EP-A- 1 418 368
- US-A- 5 613 691

## Description

### DOMAINE TECHNIQUE DE L'INVENTION

L'invention se rapporte à une garniture d'étanchéité entre deux pièces coaxiales tournant l'une par rapport à l'autre, et plus particulièrement, bien que de manière non exclusive, à une garniture de protection d'un palier à roulement, ainsi qu'à un palier à roulement comportant une telle garniture.

### ETAT DE LA TECHNIQUE ANTÉRIEURE

Dans le document FR 1.545.743 est décrit une garniture d'étanchéité pour roulement à billes ou à rouleaux associant un joint monté sur la bague extérieure du roulement et un déflecteur monté sur la bague intérieure ou toute surface adjacente. Le joint comporte deux lèvres, une première faisant barrière avec le milieu extérieur et venant frotter sur le déflecteur, et une deuxième s'étendant radialement vers l'intérieur et venant prendre appui sur la bague intérieure. Le document FR 2.644.544 décrit une garniture d'étanchéité entre deux pièces coaxiales comportant un premier joint d'étanchéité monté sur la première pièce et un deuxième joint d'étanchéité monté sur la deuxième pièce. Le premier joint est muni de deux lèvres d'étanchéité venant en contact respectivement radial et axial avec la deuxième pièce, et délimitant entre elles une chambre fermée garnie de graisse radiale. Le deuxième joint est quant à lui pourvu d'une extension s'étendant vers la première pièce dont il est séparé par une perte de charge, formant ainsi un labyrinthe entre le premier joint et l'extérieur.

Dans les montages de ce type, pour anticiper la perte d'étanchéité consécutive à l'usure de la lèvre soumise à l'environnement extérieur, on est obligé de prévoir une forte interférence, c'est-à-dire une déformation importante de la lèvre en appui sur le déflecteur par rapport à la forme de la lèvre au repos, ce qui augmente fortement le couple de rotation du joint et entraîne une usure rapide de cette lèvre. L'usure de la lèvre modifie rapidement la surface de contact et la répartition de la pression de contact. La pression maximale chute, la surface de contact augmente et la ligne de contact correspondant au maximum de pression de contact s'éloigne de la pointe de la lèvre. Ces modifications favorisent la pénétration de boue dans le contact accélérant encore l'usure, de sorte que la lèvre extérieure perd rapidement sa fonction d'étanchéité. Par ailleurs, l'expérience montre que la diminution progressive de la distance entre la face tronconique de la lèvre et la face cylindrique du déflecteur due à l'usure favorise le décollement de la lèvre en cas de battement du déflecteur, ce qui s'explique notamment par l'action de la graisse qui tend à écarter la lèvre du déflecteur.

Dans le document FR 2 369 455 est par ailleurs décrit un joint d'étanchéité tournant dynamique pour un palier antifriction dont la bague intérieure forme dans son épaulement une partie étagée périphérique présentant une profondeur importante dans la direction radiale de la bague et une surface périphérique formant le fond inclinée axialement vers l'intérieur de la bague intérieure et présentant un diamètre croissant vers l'extrémité extérieure dans le sens axial de la bague intérieure. Le joint comporte une armature métallique solidaire de la bague extérieure d'un roulement et s'étendant vers la bague intérieure. L'armature métallique sert de support à une garniture d'étanchéité à deux lèvres. Une première lèvre intérieure courte s'étend axialement vers l'intérieur du roulement, sans contact avec la bague intérieure. Une deuxième lèvre, directement exposée à l'environnement extérieur, s'étend radialement vers l'intérieur le long de la paroi latérale de la partie étagée de la bague intérieure sur une longueur assez importante lui conférant une grande flexibilité, et présente un prolongement annulaire axial venant en contact léger avec la paroi latérale de la partie étagée de la bague intérieure. Les deux lèvres forment avec la partie étagée de la bague intérieure un labyrinthe qui s'oppose à l'écoulement de lubrifiant hors du roulement. La lèvre extérieure est pourvue d'une face extérieure conique en regard du fond incliné de la partie étagée de la bague intérieure. Cette géométrie est telle que, en rotation, les gouttelettes d'eau, poussières et autres matières étrangères ont tendance à être repoussées hors du palier par la force centrifuge. L'étanchéité du dispositif dépend par son principe même de la vitesse de rotation de la partie tournante. De plus, la pression de contact entre la lèvre extérieure et la bague intérieure est volontairement faible. L'étanchéité de l'extérieur vers l'intérieur du roulement est donc mal contrôlée à faible vitesse de rotation. Si le mouvement de rotation vient à cesser, les matières étrangères peuvent s'accumuler dans l'espace tronconique délimité par la face extérieure conique de la lèvre extérieure et par la face en regard de la bague intérieure, y former un bouchon et être ainsi incitées à entrer dans le roulement lors de la reprise du mouvement de rotation. Ce type de dispositif s'avère donc mal adapté à des applications à rotation intermittente, ou à vitesse de rotation variable ou peu élevée.

Par ailleurs, on constate qu'en cas de battement de la piste de contact du fait par exemple d'un défaut de coaxialité des pièces tournantes ou d'un défaut de la piste elle-même, la variation importante de la surface de contact conduit à des variations locales du coefficient de frottement et favorisent le phénomène de d'adhérence et glissement intermittents. Typiquement, la lèvre paraît onduler avec des régions à forte pression de contact et d'autre pratiquement décollées. Il s'ensuit, notamment lorsque la pointe de la lèvre présente une faible raideur dans le sens perpendiculaire à la piste de contact, une réduction de la pression de contact, voire un décollement de lèvre, avec les conséquences prévisibles en termes de fuite de graisse, de pénétration des boues et poussières et d'usure.

On constate également, en cas de dépression dans la chambre entre la lèvre extérieure et la lèvre intérieure, une déformation de la lèvre extérieure qui a tendance à bomber. Ceci conduit à une augmentation de la surface de contact et à une diminution de la pression de contact au niveau de la pointe de la lèvre, qui favorisent l'entrée de corps étrangers, boues et poussières, et l'usure par abrasion de la lèvre et de la piste de contact.

Dans le document US 5 613 691 est décrite une garniture d'étanchéité entre un roulement à aiguilles et un arbre, comportant une lèvre intérieure et une lèvre extérieure élastique déformable présentant une extrémité libre en forme de talon avec une face de contact plane, une face extérieure perpendiculaire à la face de contact et une face intérieure formant un angle obtus avec la face de contact, cette extrémité libre étant reliée à une base de la lèvre par une partie intermédiaire flexible. En position nominale, l'extrémité libre est en appui sur la bague extérieure du roulement, sollicitant la partie intermédiaire de la lèvre en flexion. Lorsqu'une lèvre de ce type s'use, l'aire de la surface de contact augmente en même temps que la flexion de la partie intermédiaire de la lèvre diminue, ces deux facteurs contribuant à une diminution rapide de la pression de contact.

### EXPOSÉ DE L'INVENTION

L'invention vise à remédier aux inconvénients de l'état de la technique identifiés ci-dessus. En particulier, un objet de la présente invention est de réaliser une garniture d'étanchéité dont l'usure soit uniforme. Un autre objet de l'invention est de réaliser une garniture d'étanchéité dont les performances d'étanchéité aux boues, poussières et autres agressions extérieures, ne varient que peu à l'usage. Un autre objet de la présente invention est de réaliser une garniture d'étanchéité dont le couple de frottement soit réduit et relativement constant et qui offre de bonnes performances d'étanchéité, même à faible vitesse de rotation. Un autre objet de la présente invention est de réaliser une garniture d'étanchéité qui présente une résistance à l'usure améliorée.

Selon un premier aspect de l'invention, celle-ci a trait à une garniture d'étanchéité entre une première et une deuxième pièces coaxiales tournant l'une par rapport à l'autre, pour protéger un volume intérieur contre des agressions d'un environnement extérieur et/ou éviter des fuites de lubrifiant vers l'environnement extérieur, la garniture comportant une lèvre extérieure exposée à l'environnement extérieur, et une lèvre intérieure interposée entre le volume intérieur et la lèvre extérieure, une chambre annulaire fermée étant délimitée entre la lèvre intérieure et la lèvre extérieure pour recevoir un lubrifiant, la lèvre extérieure comportant :
- une base destinée à être solidaire de la première pièce,
- une extrémité libre présentant une face intérieure tournée vers la chambre annulaire, une face extérieure exposée à l'environnement extérieur et une face de contact avec une piste de contact solidaire de la deuxième pièce, et
- une partie intermédiaire déformable reliant l'extrémité libre à la base, apte à se déformer élastiquement pour permettre à l'extrémité libre de prendre une position nominale de contact avec la piste de contact en exerçant une pression nominale de contact sur la piste de contact, et autorisant un débattement élastique de l'extrémité libre sensiblement perpendiculairement à la piste de contact de part et d'autre de la position nominale de contact, la face intérieure de l'extrémité libre ayant une hauteur telle qu'en position nominale de contact, la partie intermédiaire déformable se trouve à distance de la piste de contact.

La forme de l'extrémité libre de la lèvre permet de mieux contrôler son usure. La surface maximale de contact avec la piste de contact est déterminée par la distance entre la face intérieure et la face extérieure de l'extrémité libre. La hauteur de la face intérieure de l'extrémité libre permet par ailleurs d'éviter que la partie intermédiaire de la lèvre vienne au contact de la piste de contact ou de la deuxième pièce, lorsque la lèvre s'use. Par conséquent, l'aire de la surface de contact entre la lèvre et la piste de contact, bague ou déflecteur, varie peu ou de manière contrôlée lorsque la lèvre s'use. Avec une surface stable, le coefficient de friction ne dépend plus du battement du déflecteur et le phénomène d'adhésion et de glissement intermittent s'en trouve considérablement réduit. De plus, la forme en talon de l'extrémité libre augmente la raideur de la pointe de la lèvre. Ces deux phénomènes se conjuguent pour éviter une ondulation de la pointe de la lèvre. La pression de contact reste uniforme sur la circonférence, et l'étanchéité est mieux assurée.

Chacune des faces intérieure et extérieure de l'extrémité libre est sensiblement perpendiculaire à la piste de contact, en position nominale. La surface de contact maximale effective est alors constante.

Avantageusement, la base est plus proche de la lèvre intérieure que l'extrémité libre. La lèvre extérieure va en s'évasant de sa base vers le milieu extérieur. Avantageusement, la lèvre extérieure en position nominale est déformée à partir d'une position initiale non sollicitée dans laquelle la partie intermédiaire forme un tronc de cône entre la base et l'extrémité libre.

Avantageusement, la partie intermédiaire présente une face intérieure tournée vers la chambre annulaire qui se raccorde sensiblement perpendiculairement à la face intérieure de l'extrémité libre. La face intérieure de la partie intermédiaire s'incurve et devient sensiblement parallèle à la piste de contact, au niveau de son raccordement à la face intérieure de l'extrémité libre. De manière similaire, la partie intermédiaire présente une face extérieure opposée à la face intérieure qui se raccorde sensiblement perpendiculairement à la face extérieure de l'extrémité libre.

Préférentiellement, la face intérieure est convexe et la face extérieure concave, en position nominale.

Selon un mode de réalisation, la face de contact est sensiblement radiale. Selon un mode alternatif, la face de contact est sensiblement axiale.

Avantageusement, la garniture comporte en outre une lèvre de protection sans contact avec la deuxième pièce, disposée entre la lèvre extérieure et l'environnement extérieur, délimitant avec la lèvre extérieure une préchambre ouverte vers l'environnement extérieur. Le labyrinthe ainsi formé assure une protection de la lèvre extérieure.

Selon un mode de réalisation particulier, la surface de contact est plane. Selon un mode alternatif, la surface de contact est convexe

Pour faciliter le montage, la garniture comporte une armature annulaire sur laquelle est moulée la base de la lèvre extérieure et destinée à être solidarisée à la première pièce. Pour des raisons similaires, on peut prévoir un déflecteur destiné à être solidarisé à la deuxième pièce, la piste de contact étant formée sur le déflecteur. Ces dispositions permettent de mieux contrôler le dimensionnement et les tolérances. Préférentiellement, l'armature et le déflecteur constituent deux anneaux de section générale en L disposés tête bêche pour constituer un logement pour les lèvres. La garniture forme alors une unité structurelle et fonctionnelle.

Avantageusement, la lèvre intérieure et la lèvre extérieure font partie d'un même joint en élastomère et constituent une pièce unique de garniture. Alternativement, on peut prévoir que la lèvre intérieure soit séparée de la lèvre intérieure, ce qui permet le cas échéant de la fixer à la deuxième pièce.

Préférentiellement, la pression nominale de contact est supérieure à 2 bars, de préférence de l'ordre de 8 bars.

Selon un deuxième aspect de l'invention, celle-ci a trait à un roulement comportant une première et une deuxième pièce coaxiales tournant l'une par rapport à l'autre, des pistes de roulement étant formées sur la première et la deuxième pièce pour recevoir des éléments roulants, le roulement étant pourvu d'une garniture d'étanchéité.

La piste de contact peut par exemple être formée directement sur une bague constituant l'une des piste de roulement, ou bien sur un déflecteur, notamment un déflecteur muni d'un élément codeur d'informations, par exemple magnétique, apte à coopérer avec un capteur capable de lire ces informations.

### BRÈVE DESCRIPTION DES FIGURES

D'autres avantages et caractéristiques ressortiront plus clairement de la description qui va suivre de modes particuliers de réalisation de l'invention, donnés à titre d'exemples non limitatifs, et représentés aux dessins annexés sur lesquels :
- la figure 1 représente une vue en coupe radiale d'un palier à roulement muni d'une garniture d'étanchéité selon un premier mode de réalisation de l'invention ;
- la figure 2 représente une vue en coupe radiale de la garniture d'étanchéité du premier mode de réalisation, en position nominale ;
- la figure 3 représente la garniture de la figure 1, en l'absence de déflecteur ;
- la figure 4 représente une autre variante de réalisation d'une garniture selon l'invention.

### DESCRIPTION DETAILLEE DE DIFFÉRENTS MODES DE RÉALISATION

Dans la description des différents exemples de réalisation de l'invention, on désignera par les mêmes références les organes ou groupe d'organes identiques ou similaires.

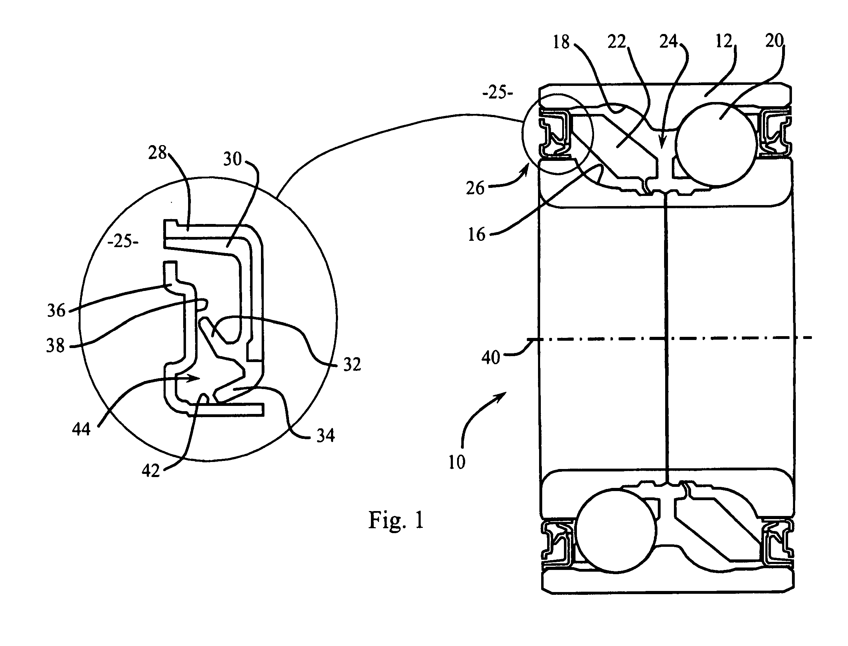

En référence à la figure 1, un palier 10 présente une bague radialement extérieure 12 et une bague radialement intérieure 14 définissant des pistes de roulement 16, 18 pour des éléments roulants 20 retenus dans une cage 22. Le volume intérieur 24 du roulement est protégé de l'environnement extérieur 25 par une garniture d'étanchéité 26 de type cassette.

La garniture comporte une armature rigide 28 de montage, de préférence métallique, constituée d'un anneau de section axiale générale en L inversé, venant se fixer sur la bague extérieure 12 du palier, et sur lequel est surmoulé un joint élastomère déformable 30 à deux lèvres d'étanchéité 32, 34 venant toutes deux en contact avec un déflecteur rigide 36, de préférence métallique, formant un anneau de section générale en L, en regard de l'armature 28.

La lèvre 32 au contact de l'environnement extérieur 25, dite dans la suite lèvre extérieure, est en appui axial contre une piste transversale plane 38 du déflecteur 36, perpendiculaire à l'axe de rotation 40 du palier. La deuxième lèvre 34, située entre la lèvre extérieure 32 et le volume intérieur 24, et de ce fait dite dans la suite lèvre intérieure, est en appui radial contre une piste de contact cylindrique 42 du déflecteur 36. La lèvre extérieure 32 et la lèvre intérieure 34 délimitent entre elles une chambre annulaire fermée 44 remplie de graisse.

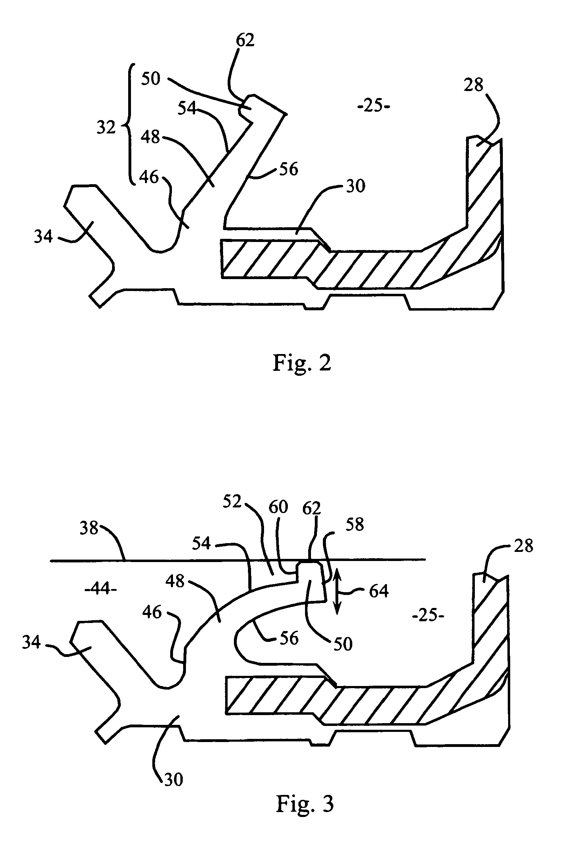

La lèvre extérieure 32, représentée en détail sur les figures 2 et 3, comporte une base 46 surmoulée sur l'armature 28, et un corps intermédiaire déformable 48 prolongé par un bourrelet d'extrémité libre 50 ayant en coupe radiale une forme de talon et venant au contact de la piste 38 du déflecteur 36. La partie intermédiaire 48 présente une face intérieure 54 tournée vers la chambre annulaire et une face extérieure 56 tournée vers l'extérieur.

Le joint 30 est représenté sur la figure 2 dans sa position au repos, avant le montage avec le déflecteur. Dans cette position de repos, la lèvre extérieure 32 a, en section axiale, une forme générale en L. La partie intermédiaire déformable 48 forme une jupe tronconique s'évasant de la base 46 vers l'extrémité libre 50 et vers le milieu extérieur 25.

Lorsque la lèvre extérieure 32 est au contact du déflecteur 38, comme représenté sur la figure 3, la partie intermédiaire 48 se galbe jusqu'à prendre, à son extrémité la plus proche du bourrelet 50, une direction sensiblement tangentielle à la piste de contact plane 38 du déflecteur. Un espace 52 est toutefois préservé entre la partie intermédiaire de la lèvre et le déflecteur, du fait du bourrelet. La face intérieure 54 est alors convexe et sans contact avec le déflecteur, et la face extérieure 56 est concave.

Le bourrelet 50 comporte une face extérieure 58 tournée vers l'environnement extérieur 25 et se raccordant approximativement à angle droit avec la face extérieure 56 de la partie intermédiaire, une face intérieure 60 tournée vers la chambre de lubrification 44 et se raccordant approximativement à angle droit avec la face intérieure 54 de la partie intermédiaire, et une face de contact 62 avec la piste de contact 38, sensiblement perpendiculaire aux deux autres faces. La hauteur de la face intérieure 60, mesurée perpendiculairement à la piste de contact 38 détermine également la distance entre la partie intermédiaire et la piste de contact 38. A titre indicatif, cette hauteur est en pratique, en position nominale, de l'ordre de 0,15 à 0,5 mm, ou plus importante encore, et préférentiellement de l'ordre de 0,3mm. La distance séparant la face intérieure 60 et la face extérieure 58 du bourrelet au niveau de la piste de contact est de l'ordre de 0,2 à 0,5 mm, de préférence de l'ordre de 0,3mm.

La déformation élastique de la partie intermédiaire 48 de la lèvre permet d'assurer une pression de contact entre la face de contact 62 et la piste de contact 38. En pratique, la lèvre extérieure 32 est dimensionnée de préférence pour que la pression nominale exercée sur la piste de contact plane soit comprise, suivant l'application, entre 4 et 10 bars, typiquement de l'ordre de 8 bars. La flexibilité de la partie intermédiaire 48 assure au bourrelet 50 d'extrémité une certaine liberté de mouvement dans une direction essentiellement perpendiculaire à la surface de la piste de contact 38, suivant la flèche 64. Ce degré de liberté permet notamment de maintenir le contact entre la lèvre extérieure 32 et la piste de contact 38 lorsque la piste de contact est déformée ou n'est pas rigoureusement coaxiale avec la lèvre 32 et que la lèvre 32 est soumise de ce fait à un battement.

Lorsque le bourrelet 50 de la lèvre s'use, la partie intermédiaire déformable 48 de la lèvre se détend très légèrement pour se rapprocher du déflecteur 36, de sorte que le bourrelet 50 reste en contact avec la piste 38. La partie du bourrelet 50 en contact avec la piste est délimitée de part et d'autre par les faces intérieures 60 et extérieure 58 du bourrelet 50, de sorte que la face de contact 62 conserve pratiquement les mêmes dimensions et la même localisation par rapport à la piste de contact 38. En particulier, le contact entre la lèvre 32 et la piste de contact 38 ne se déplace pas notablement vers la chambre de lubrification 44, évitant ainsi une diminution de la résultante, au niveau de la piste de contact, du couple exercé par la partie intermédiaire élastique 48. Par ailleurs, la surface effectivement en contact avec la piste de contact garde une aire pratiquement constante, définie par la distance séparant la face intérieure 60 et la face extérieure 58 du bourrelet au niveau de la piste de contact, de sorte que la pression de contact ne se modifie pas. On maintient ainsi la pression de contact qui permet d'assurer l'étanchéité recherchée.

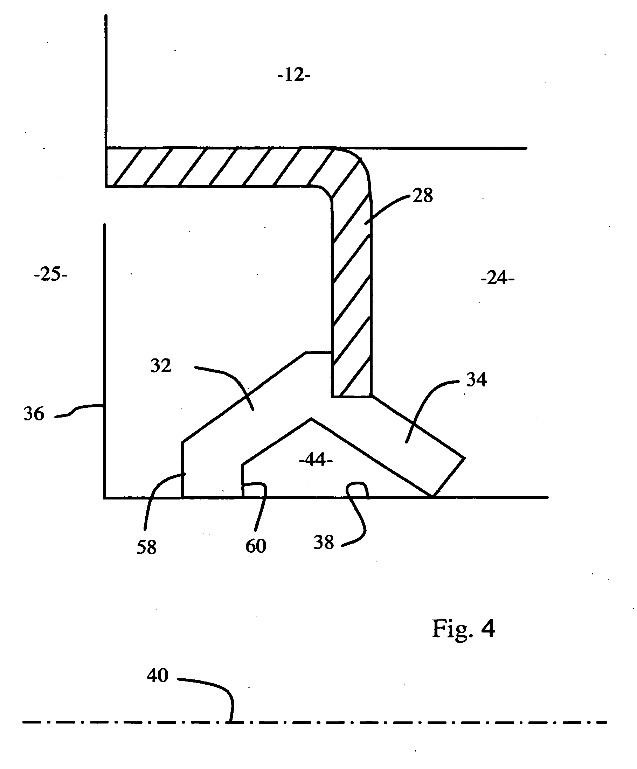

Selon une variante représentée sur la figure 4, la lèvre intérieure 34 et la lèvre extérieure 32 sont au contact d'une même surface antagoniste 138 qui peut être une surface cylindrique radiale ou une surface plane perpendiculaire à l'axe de rotation, suivant l'application.

Selon une autre variante non représentée, la lèvre extérieure est en appui radial contre une piste de contact cylindrique alors que la lèvre intérieure est en appui axial contre une piste transversale plane du déflecteur, perpendiculaire à l'axe de rotation du palier.

Selon une autre variante non représentée, l'une et/ou l'autre des pistes de contact peuvent être tronconiques.

Selon une autre variante non représentée, l'une et/ou l'autre des pistes de contact peuvent avoir, en coupe axiale, une section concave ou convexe.

La surface de contact de la lèvre extérieure n'est pas nécessairement plane. Son contact avec la piste de contact, lorsque la garniture est neuve, peut être linéaire.

D'autres variantes sont naturellement possibles. La garniture peut être placée indifféremment sur l'armature intérieure ou sur l'armature extérieure. L'armature peut faire partie intégrante de la bague extérieure ou à la bague intérieure d'un roulement et présenter une forme quelconque. Le déflecteur peut être intégré à la bague antagoniste, ou omis, auquel cas les lèvres du joint viendront directement au contact de la pièce antagoniste. Le déflecteur peut par ailleurs être pourvu d'un d'un élément codeur d'informations, par exemple magnétique, apte à coopérer avec un capteur capable de lire ces informations situé sur l'autre pièce tournante.

## Revendications

1. Garniture d'étanchéité (26) entre une première (14) et une deuxième (12) pièces coaxiales tournant l'une par rapport à l'autre, pour protéger un volume intérieur (24) contre des agressions d'un environnement extérieur (25) et/ou éviter des fuites de lubrifiant vers l'environnement extérieur, la garniture (26) comportant une lèvre extérieure (32) exposée à l'environnement extérieur, et une lèvre intérieure (34) interposée entre le volume intérieur (24) et la lèvre extérieure (32), une chambre annulaire fermée (44) étant délimitée entre la lèvre intérieure (34) et la lèvre extérieure (32) pour recevoir un lubrifiant, la lèvre extérieure (32) comportant :
- une base (46) destinée à être solidaire de la première pièce (14),
- une extrémité libre (50) présentant une face intérieure (60) tournée vers la chambre annulaire, une face extérieure (58) exposée à l'environnement extérieur et une face de contact (62) avec une piste de contact (38) solidaire de la deuxième pièce (12),
- une partie intermédiaire déformable (48) reliant l'extrémité libre (50) à la base, apte à se déformer élastiquement pour permettre à l'extrémité libre (50) de prendre une position nominale de contact avec la piste de contact (38) en exerçant une pression nominale de contact sur la piste de contact (38), et autorisant un débattement élastique (64) de l'extrémité libre sensiblement perpendiculairement à la piste de contact (38) de part et d'autre de la position nominale de contact, la face intérieure (60) de l'extrémité libre ayant une hauteur telle qu'en position nominale de contact, la partie intermédiaire déformable (48) se trouve à distance de la piste de contact (38),
**caractérisée en ce qu'**en position nominale, chacune des faces intérieures (60) et extérieure (58) de l'extrémité libre est sensiblement perpendiculaire à la piste de contact (38).

2. Garniture d'étanchéité selon la revendication 1, dans laquelle la lèvre extérieure (32) en position nominale est déformée à partir d'une position initiale non sollicitée dans laquelle la partie intermédiaire forme un tronc de cône entre la base (46) et l'extrémité libre (50).

3. Garniture d'étanchéité selon l'une quelconque des revendications précédentes, **caractérisée en ce que** la partie intermédiaire (48) présente une face intérieure (54) tournée vers la chambre annulaire et qui se raccorde sensiblement perpendiculairement à la face intérieure (60) de l'extrémité libre.

4. Garniture d'étanchéité selon la revendication 3, **caractérisée en ce que** la partie intermédiaire présente une face extérieure opposée à la face intérieure et qui se raccorde sensiblement perpendiculairement à la face extérieure de l'extrémité libre.

5. Garniture d'étanchéité selon la revendication 4, **caractérisée en ce que** la face intérieure est convexe et la face extérieure concave, en position nominale.

6. Garniture d'étanchéité selon l'une quelconque des revendications précédentes, **caractérisée en ce que** la face de contact est sensiblement radiale.

7. Garniture d'étanchéité selon l'une quelconque des revendications 1 à 3, **caractérisée en ce que** la face de contact est sensiblement axiale.

8. Garniture d'étanchéité selon l'une quelconque des revendications précédentes, **caractérisée en ce qu'**elle comporte en outre des moyens (36) assurant une perte de charge entre la lèvre extérieure et l'environnement extérieur et délimitant avec la lèvre extérieure (32) une préchambre ouverte vers l'environnement extérieur.

9. Garniture d'étanchéité selon l'une quelconque des revendications précédentes, **caractérisée en ce que** la surface de contact est plane ou convexe (62).

10. Garniture d'étanchéité selon l'une quelconque des revendications précédentes, **caractérisée en ce qu'**elle comporte en outre une armature annulaire (28) sur laquelle est moulée la base de la lèvre extérieure (32) et destinée à être solidarisée à la première pièce.

11. Garniture d'étanchéité selon la revendication 10, **caractérisée en ce qu'**elle comporte en outre un déflecteur (36) destiné à être solidarisé à la deuxième pièce, la piste de contact (38) étant formée sur le déflecteur.

12. Garniture d'étanchéité selon la revendication 10, **caractérisée en ce que** l'armature (28) et le déflecteur (36) constituent deux anneaux de section générale en L disposés tête bêche pour constituer un logement pour les lèvres.

13. Garniture d'étanchéité selon l'une quelconque des revendications précédentes, **caractérisée en ce que** la lèvre intérieure (34) et la lèvre extérieure (32) constituent une pièce unique (30) de garniture.

14. Garniture d'étanchéité selon l'une quelconque des revendications 1 à 12, **caractérisée en ce que** la lèvre intérieure est destinée à être fixée à la deuxième pièce.

15. Garniture d'étanchéité selon l'une quelconque des revendications précédentes, **caractérisée en ce que** la pression nominale de contact est comprise entre 4 et 12 bars, de préférence de l'ordre de 8 bars.

16. Roulement comportant une première (14) et une deuxième (12) pièces coaxiales tournant l'une par rapport à l'autre, des pistes de roulement (16, 18) étant formées sur la première et la deuxième pièce pour recevoir des éléments roulants (20), **caractérisé en ce que** le roulement est pourvu d'une garniture d'étanchéité (26) selon l'une quelconque des revendications précédentes.

17. Roulement selon de la revendication 16, **caractérisé en ce que** la piste de contact est formée directement sur une bague constituant l'une des piste de roulement.

18. Roulement selon la revendication 16, **caractérisé en ce que** la piste de contact est formée sur un déflecteur.

19. Roulement selon la revendication 18, **caractérisé en ce que** le déflecteur est muni d'un élément codeur d'informations, par exemple magnétique, apte à coopérer avec un capteur capable de lire ces informations.

## Claims

1. A packing seal (26) between a first (14) and a second (12) coaxial parts rotating with respect to each other, to protect an internal volume (24) against aggressions from an external environment (25) and/or to prevent lubricant leakages to the external environment, the packing seal (26) including an external lip (32) exposed to the external environment and an internal lip (34) interposed between the internal volume (24) and the external lip (32), a closed annular chamber (44) being delimited between the internal lip (34) and the external lip (32) for receiving a lubricant, with the external lip (32) including:
- a base (46) intended to be integral with the first part (14),
- a free end (50) having an internal face (60) facing the annular chamber, an external face (58) exposed to the external environment and a contact face (62) in contact with a contact pathway (38) integral with the second part (12),
- a deformable intermediate part (48) connecting the free end (50) with the base, able to elastically deform to enable the free end (50) to take a nominal contact position with the contact pathway (38) by exerting a nominal contact pressure on the contact pathway (38) and allowing an elastic travel (64) of the free end substantially perpendicularly to the contact pathway (38), on either side of the nominal contact position, with the internal face (60) of the free end having such a height that in the nominal contact position, the deformable intermediate part (48) is at a distance from the contact pathway (38),
**characterised in that** in the nominal position, each one of the internal (60) and external (58) faces of the free end is substantially perpendicular to the contact pathway (38).

2. A packing seal according to claim 1, wherein the external lip (32) in the nominal position is deformed from a non-stressed initial position wherein the intermediate part forms a truncated cone between the base (46) and the free end (50).

3. A packing seal according to any one of the preceding claims, **characterised in that** the intermediate part (48) has an internal face (54) facing the annular chamber and which is connected substantially perpendicularly to the internal face (60) of the free end.

4. A packing seal according to claim 3, **characterised in that** the intermediate part has an external face opposite the internal face and which is connected substantially perpendicularly to the external face of the free end.

5. A packing seal according to claim 4, **characterised in that** the internal face is convex and the external face is concave in the nominal position.

6. A packing seal according to any one of the preceding claims, **characterised in that** the contact face is substantially radial.

7. A packing seal according to any one of claims 1 to 3, **characterised in that** the contact face is substantially axial.

8. A packing seal according to any one of the preceding claims, **characterised in that** it further includes means (36) providing a head loss between the external lip and the external environment and defining with the external lip (32) a prechamber opening to the external environment.

9. A packing seal according to any one of the preceding claims, **characterised in that** the contact surface is plane or convex (62).

10. A packing seal according to any one of the preceding claims, **characterised in that** it further includes an annular structure (28) on which the base of the external lip (32) is moulded and intended to be made integral with the first part.

11. A packing seal according to claim 10, **characterised in that** it further includes a deflector (36) intended to be made integral with the second part, with the contact pathway (38) being formed on the deflector.

12. A packing seal according to claim 10, **characterised in that** the structure (28) and the deflector (36) compose two rings having a general L-shaped section positioned head to foot to provide an accommodation for the lips.

13. A packing seal according to any one of the preceding claims, **characterised in that** the internal lip (34) and the external lip (32) compose a single part (30) of the packing seal.

14. A packing seal according to any one of claims 1 to 12, **characterised in that** the internal lip is intended to be fixed to the second part.

15. A packing seal according to any one of the preceding claims, **characterised in that** the nominal contact pressure is contained between 4 and 12 bar, preferably of the order of 8 bar.

16. A bearing including a first (14) and a second (12) coaxial parts rotating with respect to each other, with raceways (16, 18) being formed on the first and second parts for receiving rolling elements (20), **characterised in that** the bearing is provided with a packing seal (26) according to any one of the preceding claims.

17. A bearing according to claim 16, **characterised in that** the contact pathway is formed directly on a ring composing one of the raceways.

18. A bearing according to claim 16, **characterised in that** the contact pathway is formed on a deflector.

19. A bearing according to claim 18, **characterised in that** the deflector is provided with an element, for example a magnetic one, for encoding information and able to cooperate with a sensor able to read such information.

## Patentansprüche

1. Dichtung (26) zwischen einem ersten (14) und einem zweiten (12) koaxialen Teil, die gegeneinander drehen, um ein Innenvolumen (24) vor Angriffen durch eine äußere Umgebung (25) zu schützen und/oder Schmiermittellecks in die äußere Umgebung zu vermeiden, wobei die Dichtung (26) eine der äußeren Umgebung ausgesetzte Außenlippe (32) umfaßt und eine Innenlippe (34), die sich zwischen dem Innenvolumen (24) und der Außenlippe (32) befindet, wobei eine ringförmige geschlossene Kammer (44) zwischen der Innenlippe (34) und der Außenlippe (32) abgegrenzt wird, um ein Schmiermittel aufzunehmen, wobei die Außenlippe (32) folgende Teile umfaßt:
- eine Basis (46), die zum festen Verbinden mit dem ersten Teil (14) bestimmt ist,
- ein freies Ende (50), das eine Innenseite (60) aufweist, die zur ringförmigen Kammer gedreht ist, eine Außenseite (58), die der äußeren Umgebung ausgesetzt ist, und eine Kontaktseite (62) mit einer Kontaktspur (38), die fest mit dem zweiten Teil (12) verbunden ist,
- ein verformbarer Zwischenteil (48), der das freie Ende (50) mit der Basis verbindet und geeignet ist, sich elastisch zu verformen, damit das freie Ende (50) eine Nennposition für den Kontakt mit der Kontaktspur (38) einnehmen kann, indem es einen Nennkontaktdruck auf die Kontaktspur (38) ausübt und einen elastischen Ausschlag (64) des freien Endes deutlich senkrecht zur Kontaktspur (38) zu beiden Seiten der Nennkontaktposition zuläßt, wobei die Innenseite (60) des freien Endes eine solche Höhe hat, daß sich der verformbare Zwischenteil (48) in Nennkontaktposition in Entfernung von der Kontaktspur (38) befindet,
**dadurch gekennzeichnet, daß** in Nennposition die Innenseite (60) und die Außenseite (58) des freien Endes deutlich senkrecht zur Kontaktspur (38) stehen.

2. Dichtung nach Anspruch 1, **dadurch gekennzeichnet, daß** die Außenlippe (32) in Nennposition ab einer unbelasteten Ausgangsposition verformt wird, in der der Zwischenteil einen Kegelstamm zwischen der Basis (46) und dem freien Ende (50) bildet.

3. Dichtung nach einem beliebigen der vorstehenden Ansprüche, **dadurch gekennzeichnet, daß** der Zwischenteil (48) eine Innenseite (54) aufweist, die zur ringförmigen Kammer gedreht ist, und die sich deutlich senkrecht an die Innenseite (60) des freien Endes anschließt.

4. Dichtung nach Anspruch 3, **dadurch gekennzeichnet, daß** der Zwischenteil eine Außenseite entgegengesetzt zur Innenseite aufweist, und die sich deutlich senkrecht an die Außenseite des freien Endes anschließt.

5. Dichtung nach Anspruch 4, **dadurch gekennzeichnet, daß** in Nennposition die Innenseite konvex und die Außenseite konkav ist.

6. Dichtung nach einem beliebigen der vorstehenden Ansprüche, **dadurch gekennzeichnet, daß** die Kontaktseite deutlich radial ist.

7. Dichtung nach einem beliebigen der vorstehenden Ansprüche 1 bis 3, **dadurch gekennzeichnet, daß** die Kontaktseite deutlich axial ist.

8. Dichtung nach einem beliebigen der vorstehenden Ansprüche, **dadurch gekennzeichnet, daß** sie außerdem Mittel (36) umfaßt, die einen Druckverlust zwischen der Außenlippe und der äußeren Umgebung gewährleisten und mit der Außenlippe (32) eine zur äußeren Umgebung hin offene Vorkammer abgrenzen.

9. Dichtung nach einem beliebigen der vorstehenden Ansprüche, **dadurch gekennzeichnet, daß** die Kontaktfläche eben oder konvex (62) ist.

10. Dichtung nach einem beliebigen der vorstehenden Ansprüche, **dadurch gekennzeichnet, daß** sie außerdem eine ringförmige Bewehrung (28) umfaßt, auf der die Basis der Außenlippe (32) aufgegossen ist, und die dazu bestimmt ist, fest mit dem ersten Teil verbunden zu werden.

11. Dichtung nach Anspruch 10, **dadurch gekennzeichnet, daß** sie außerdem einen Ablenker (36) umfaßt, der bestimmt ist, fest mit dem zweiten Teil verbunden zu werden, wobei die Kontaktspur (38) auf dem Ablenker gebildet wird.

12. Dichtung nach Anspruch 10, **dadurch gekennzeichnet, daß** die Bewehrung (28) und der Ablenker (36) zwei Ringe mit allgemeinem L-Querschnitt bilden, die gegenüber angeordnet sind, um eine Aufnahme für die Lippen zu bilden.

13. Dichtung nach einem beliebigen der vorstehenden Ansprüche, **dadurch gekennzeichnet, daß** die Innenlippe (34) und die Außenlippe (32) ein einziges (30) Dichtungsteil bilden.

14. Dichtung nach einem beliebigen der vorstehenden Ansprüche 1 bis 12, **dadurch gekennzeichnet, daß** die Innenlippe dazu bestimmt ist, am zweiten Teil befestigt zu werden.

15. Dichtung nach einem beliebigen der vorstehenden Ansprüche, **dadurch gekennzeichnet, daß** der Nennkontaktdruck zwischen 4 und 12 Bar beträgt, bevorzugt um 8 Bar.

16. Wälzlager, das ein erstes (14) und ein zweites (12) koaxiales Teil umfaßt, die gegeneinander drehen, wobei die Rollspuren (16, 18) auf dem ersten und dem zweiten Teil gebildet sind, um Rollelemente (20) aufzunehmen, **dadurch gekennzeichnet, daß** das Wälzlager mit einer Dichtung (26) nach einem beliebigen der vorstehenden Ansprüche versehen ist.

17. Wälzlager nach Anspruch 16, **dadurch gekennzeichnet, daß** die Kontaktspur direkt auf einem Ring gebildet ist, der eine der Rollspuren darstellt.

18. Wälzlager nach Anspruch 16, **dadurch gekennzeichnet, daß** die Kontaktspur auf einem Ablenker gebildet ist.

19. Wälzlager nach Anspruch 18, **dadurch gekennzeichnet, daß** der Ablenker mit einem Codierelement für Informationen versehen ist, zum Beispiel magnetischer Art, das geeignet ist, mit einer Sonde zusammen zu arbeiten, die diese Informationen lesen kann.
